# FASCICULE DE BREVET EUROPEEN

(11) **EP 0 504 035 B1**
(45) Date de publication et mention de la délivrance du brevet: **03.01.1996**
(21) Numéro de dépôt: 92400613.3
(22) Date de dépôt: 10.03.1992
(51) Int. Cl.: H02G 15/184, H01R 13/53

(54) **Dispositif de raccordement pour un ou deux câbles électriques, et procédé pour monter ce dispositif à l'extrémité du ou des câbles**
Verbindungsvorrichtung für ein oder zwei elektrische Kabel, und Verfahren zum Montieren der Vorrichtung an das Ende des oder der Kabel
Connecting device for one or two power cables, and process for mounting this device at the end of the cables

(30) Priorité: 12.03.1991 FR 9102949
(43) Date de publication de la demande: 16.09.1992
(73) Titulaire: CABLES PIRELLI, F-94417 Saint Maurice Cédex (FR)
(72) Inventeur: Tardif, Laurent, F-75014 Paris (FR)
(74) Mandataire: Lhuillier, René

(56) Documents cités:
- EP-A- 0 139 483
- EP-A- 0 415 082
- EP-A- 0 435 569
- DE-A- 3 837 120
- DE-U- 8 219 184
- DE-U- 9 002 070
- FR-A- 2 339 968
- FR-A- 2 592 825
- GB-A- 2 046 032

## Description

L'invention concerne un dispositif de raccordement pour équiper une extrémité d'un câble électrique ou relier entre elles deux extrémités de deux câbles électriques, ce dispositif comprenant un manchon multicouche monobloc ayant un axe et présentant une couche intermédiaire isolante interposée entre deux couches radialement intérieure et extérieure aptes à assurer un guidage d'un champ électrique, ce manchon comportant une portion axialement médiane logeant des moyens de contact électrique destinés à coopérer avec une âme du ou des câbles, une première extrémité destinée à coopérer avec une extrémité isolée de câble et une seconde extrémité destinée à coopérer, soit avec un autre dispositif de raccordement, soit avec une autre extrémité isolée de câble.

Elle concerne plus particulièrement les câbles de moyenne tension, c'est-à-dire dont la tension nominale est comprise entre 1 et 36 KV.

Un problème particulier qui se pose pour équiper une extrémité de câble électrique d'un dispositif de raccordement est qu'il faut adapter le diamètre intérieur du manchon au diamètre du câble considéré. Cette adaptation nécessite d'avoir à disposition, soit plusieurs dispositifs de raccordement de taille différente, chacun étant conçu pour s'adapter exactement au diamètre du câble considéré, soit plusieurs tubes adaptateurs d'épaisseur différente, chaque tube permettant une adaptation du dispositif de raccordement à un câble de diamètre déterminé.

Ces solutions sont coûteuses car elles obligent à posséder un grand nombre de dispositifs de raccordement ou de tubes adaptateurs pour s'adapter à toute une gamme de câbles.

Une autre solution connue consiste à concevoir un manchon cylindrique droit pouvant être expansé dans son ensemble sur une plage de diamètres suffisamment grande pour pouvoir recevoir des câbles de diamètres différents, comme cela est enseigné dans les documents FR-A-2 592 825, EP-A-0.415.082 et GB-A-2.046.032.

Cette solution donne satisfaction. Toutefois, on constate que la mise en expansion puis ensuite la rétraction de l'ensemble du manchon prend un temps assez long. Par ailleurs, le maintien du manchon, pendant l'expansion, n'est pas aisé du fait que ce maintien ne doit pas s'opposer à l'effet d'expansion.

Enfin, certains dispositifs de raccordement ne peuvent subir une expansion dans leur ensemble, compte tenu de leur forme particulière ou du fait qu'ils comportent une partie interne massive, non expansible. Il s'agit notamment des prises de raccordement embrochables. Ces dispositifs ne peuvent donc être adaptés à différents diamètres de câbles que grâce à l'emploi des tubes adaptateurs précités.

Le problème que vise à résoudre l'invention est de proposer des moyens permettant d'adapter toute sorte de dispositifs de raccordement à différents diamètres de câbles, d'une manière simple et sans utiliser des tubes adaptateurs connus.

L'invention concerne à cet effet un dispositif de raccordement du genre cité au début de l'exposé, caractérisé en ce que la ou lesdites extrémités du manchon destinées à coopérer avec une extrémité de câble sont dans un état d'expansion radiale tel qu'elles présentent, en tout point le long de l'axe du manchon, un diamètre intérieur qui est supérieur au diamètre extérieur que présente l'extrémité de câble correspondante en ce point et qui sera inférieur à ce diamètre extérieur une fois qu'une rétraction desdites extrémités du manchon aura été provoquée, tandis que ladite portion axialement médiane du manchon et, le cas échéant, l'extrémité du manchon destinée à coopérer avec un autre dispositif de raccordement sont dans un état de non-expansion radiale.

Ainsi, les opérations d'expansion préalable du manchon puis de rétraction sur les câbles sont plus rapides puisqu'elles ne concernent qu'une partie du manchon.

De plus, le manchon pourra, à tout moment, être saisi par ses portions non expansées en vue de son maintien.

Un tel dispositif peut être du genre possédant une extrémité non expansible, non destinée à s'appliquer autour d'une extrémité de câble : dans ce cas, seule l'extrémité destinée à coopérer avec le câble subira les opérations d'expansion puis de rétraction.

Le dispositif précité est tel qu'il a subi préalablement une expansion et peut alors être déposé directement sur chantier par un opérateur.

L'invention concerne aussi un tel dispositif, tel qu'il se présente avant expansion et qui incorpore en outre en lui-même des moyens de maintien en position expansée, c'est-à-dire un dispositif caractérisé en ce que la ou lesdites extrémités du manchon destinées à coopérer avec une extrémité de câble comportent des moyens de maintien susceptibles de les maintenir dans un état d'expansion radiale, tandis que ladite portion axialement médiane du manchon et, le cas échéant, l'extrémité du manchon destinée àcoopérer avec un autre dispositif de raccordement seront dans un état de non-expansion radiale.

Selon une première forme de réalisation, lesdits moyens de maintien consistent en ce que la ou les extrémités expansibles du manchon comprennent une portion en un matériau thermorétractable tandis que le reste du manchon est en un matériau non-thermorétractable.

Selon une seconde forme de réalisation, lesdits moyens de maintien comprennent des pattes de traction solidaires d'une surface extérieure de chacune des extrémités expansibles du manchon.

L'invention concerne encore un procédé pour monter un tel dispositif de raccordement à l'extrémité d'un câble électrique, caractérisé par les étapes consistant à expanser radialement seulement ladite ou lesdites extrémités expansibles du manchon dans une mesure telle qu'elles présentent, en tout point le long de l'axe du manchon, un diamètre intérieur qui est supérieur au diamètre extérieur que présente l'extrémité de câble correspondante en ce point, tout en maintenant ladite portion axialement médiane du manchon et, le cas échéant, l'extrémité du manchon destinée à coopérer avec un autre dispositif de raccordement dans un état de non-expansion radiale ; enfiler la ou les extrémités de câble à l'intérieur du dispositif de raccordement ainsi expansé et relier électriquement l'âme du ou des câbles auxdits moyens de contact électrique ; et provoquer la rétraction de ladite ou desdites extrémités expansées du manchon sur la ou les extrémités de câble.

D'autres détails et avantages de l'invention apparaitront au cours de la description suivante d'une forme de réalisation préférée mais non limitative, en regard des dessins annexés sur lesquels :
La figure 1 est une vue en coupe longitudinale d'une prise selon l'invention, avant sa reprise dimensionnelle sur un câble ;
La figure 2 est une vue similaire, après la reprise dimensionnelle de la prise sur le câble.
La figure 3 est une vue en coupe longitudinale d'un corps de jonction selon l'invention, avant sa reprise dimensionnelle sur une jonction entre câbles ;
la figure 4 est une variante de la figure 3 ;
la figure 5 est une vue du corps de jonction des figures 3 ou 4, après sa reprise dimensionnelle sur les câbles ; et
la figure 6 est une vue en coupe selon la ligne VI-VI de la figure 3.

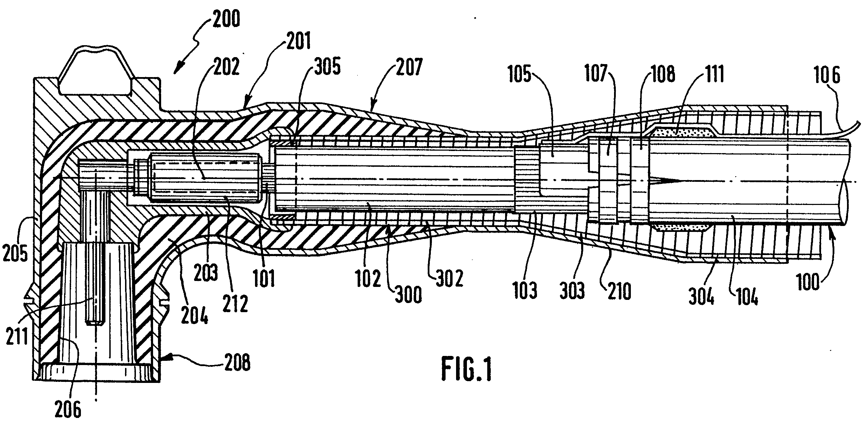

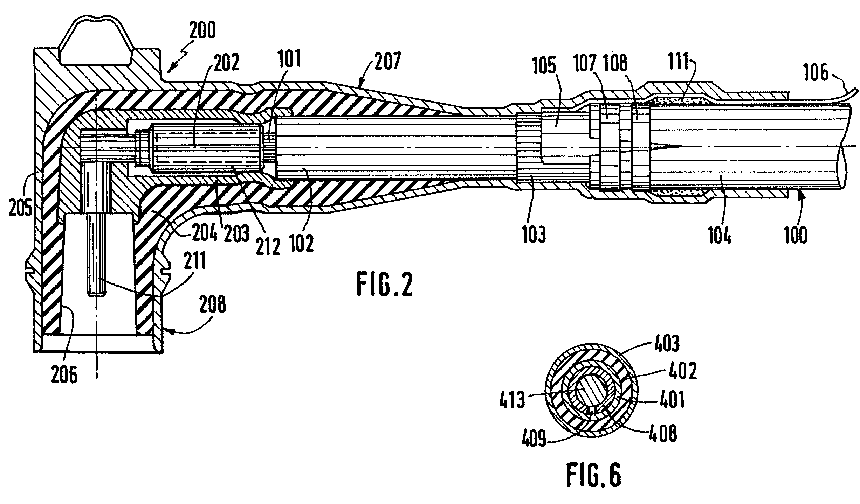

Les figures 1 et 2 montrent une prise 200 disposée à une extrémité d'un câble 100. L'extrémité de câble a été dénudée de façon connue en soi. Sur les figures apparaissent, radialement de l'intérieur vers l'extérieur, une âme conductrice 101, une couche isolante 102, un écran conducteur 103 et une gaine extérieure isolante 104. Une plaquette conductrice 105 est interposée entre l'écran conducteur 103 et la gaine extérieure 104. Elle est maintenue par des colliers 107,108 enserrant la gaine extérieure 104. Une tresse de mise à la terre 106 est reliée à la plaquette conductrice 105. Un anneau de mastic d'étanchéité 111 recouvre une extrémité de la gaine extérieure 104.

La prise 200 comprend de façon connue en soi un manchon multicouche 201 dont la section longitudinale a, dans cet exemple, une forme d'équerre en L, ce manchon ayant un axe 202 et comportant, tel qu'observé radialement, une couche intérieure conductrice 203, une couche intermédiaire isolante 204 et une couche extérieure conductrice 205. Les couches intérieure et extérieure pourraient présenter, en variante, d'autres caractéristiques électriques aptes à assurer un guidage d'un champ électrique, telles qu'une caractéristique semi-conductrice.

Au voisinage d'une extrémité 207 du manchon recevant le câble 100, et d'une autre extrémité embrochable 208, la couche isolante 204 affleure une surface intérieure 206 du manchon. De même, la couche extérieure conductrice 205 affleure la surface intérieure 206 à l'extrémité du manchon recevant le câble, laquelle présente à cet effet une forme conique.

Du côté de l'extrémité du manchon 201 recevant le câble 100, la couche extérieure présente un prolongement cylindrique 210, qui s'étend selon l'axe 201 du manchon sur une longueur égale, dans cet exemple, à environ la moitié de celle du manchon 201.

Le manchon 201 est réalisé en un matériau élastomère présentant un degré d'élasticité permettant, après expansion puis rétraction du manchon, son adaptation à des câbles de diamètres sensiblement différents, plus précisément des câbles dont le diamètre varie du simple au double. Un élastomère qui convient particulièrement est l'EPDM.

L'extrémité conique 207 du manchon et son prolongement cylindrique 210 présentent, au repos, et en tout point le long de l'axe 202 du manchon, un diamètre intérieur un peu inférieur au diamètre extérieur que présente en ce point l'extrémité du câble de diamètre le plus petit, choisi parmi une série de câbles de différentes dimensions, que l'on veut pouvoir adapter à la prise 200. Le diamètre intérieur de l'extrémité conique 207 et du prolongement cylindrique 210 sera choisi en outre de façon que ces parties exercent, après leur expansion puis leur rétraction, une force de serrage sur ledit câble de plus petit diamètre.

De façon connue en soi, une douille 212 est sertie sur l'âme conductrice 101 du câble 100, un plot de contact mâle 211 étant fixé par vissage à une extrémité libre de la douille 212.

Le montage de la prise 200 sur le câble 100 va maintenant être décrit. Dans une première phase, l'extrémité conique 207 du manchon 201 et son prolongement cylindrique 210 sont expansés radialement jusqu'à un diamètre intérieur supérieur au diamètre extérieur d'une partie correspondante du câble à recouvrir.

Dans cet exemple, l'extrémité conique 207 du manchon 201 et son prolongement cylindrique 210 ont été expansés en usine par des moyens connus en eux-mêmes, par exemple par utilisation d'une chambre à vide ou d'un mandrin, et un tube 300 a été introduit à l'intérieur de ceux-ci pour les maintenir en expansion.

Le tube 300 est constitué d'un ruban déchirable et comprend une portion cylindrique de petit diamètre 302, prolongée par une portion conique 303 s'élargissant vers une portion cylindrique de grand diamètre 304, la première portion citée recouvrant une région du câble dans laquelle apparaît sa couche isolante 102, et les deux autres portions citées recouvrant les moyens de mise à la terre du câble et le mastic 111.

De façon connue en soi, une bague 305 est disposée à une extrémité libre de la portion cylindrique de petit diamètre 302 du tube 300 pour faciliter le retrait ultérieur de celui-ci.

L'extrémité conique 207 du manchon 201 de la prise s'appuie sur la portion cylindrique de petit diamètre 302 du tube 300 tandis que son prolongement cylindrique 210 s'appuie sur la portion conique 303 et la portion cylindrique de grand diamètre 304.

Dans une seconde phase de montage sur site, l'extrémité de câble est préparée de façon à être dénudée et équipée d'une part de sa douille 212, d'autre part de ses moyens de mise à la terre 105 à 108, 111 puis elle est insérée à l'intérieur de la prise 200. Le plot de contact mâle 211 est alors visé sur l'extrémité libre de la douille 212. Ensuite, le tube 300 est retiré progressivement par un opérateur, à partir de son extrémité disposée le plus à l'intérieur de la prise, par déchirement du ruban. L'extrémité conique 207 et le prolongement cylindrique 210 du manchon 201 se rétractent alors par élasticité sur les parties correspondantes du câble 100. La situation obtenue est illustrée sur la figure 2.

On notera que le prolongement cylindrique 210 recouvre les moyens de mise à la terre du câble à la manière d'un capot de terre classique, constitué par une gaine tubulaire à reprise dimensionnelle, indépendante de la prise.

Selon une variante moins avantageuse non représentée sur les figures, la prise 200 ne comporte pas de prolongement cylindrique 210, celui-ci étant remplacé par un capot de terre classique disposé sur le câble avant rétraction de la prise. Dans ce cas, l'extrémité conique 207 du manchon recouvre le capot de terre sur une faible longueur.

En variante, l'extrémité conique 207 du manchon 201 et son prolongement cylindrique 210 portent, sur une surface extérieure, des pattes de traction permettant leur expansion radiale grâce à un dispositif assurant une traction sur ces pattes de traction, radialement vers l'extérieur de la prise.

En variante, à l'extrémité conique 207 du manchon 201, la couche extérieure conductrice 205 et son prolongement cylindrique 210 présentent une caractéristique thermorétractable alors que le reste du manchon présente une caractéristique non thermorétractable.

Le montage d'une telle prise sur le câble 100 comprend une première phase dans laquelle l'extrémité conique 207 du manchon 201 et son prolongement cylindrique 210 sont chauffés puis expansés radialement en usine par des moyens connus en eux-mêmes, par exemple par utilisation d'une chambre à vide ou d'un mandrin, puis ils sont refroidis et se maintiennent alors en expansion.

Dans une seconde phase de montage sur site, l'extrémité conique 207 du manchon 201 et son prolongement cylindrique 210 sont réchauffés, de sorte qu'ils se rétractent sur le câble 100.

L'invention s'applique de façon tout à fait similaire à un corps de jonction 400 destiné à relier des extrémités de deux câbles 501, 502, ceux-ci étant de conception identique à celui 100 des figures 1 et 2.

Le corps de jonction 400 est constitué d'un manchon multicouche comportant, tel qu'observé radialement, une couche intérieure conductrice 401, une couche intermédiaire isolante 402 et une couche extérieure conductrice 403. De façon semblable au manchon multicouche 201 des figures 1 et 2, la couche intermédiaire isolante 402 affleure une surface intérieure du corps de jonction, et la couche extérieure conductrice présente un prolongement cylindrique 404 à deux extrémités, qui s'étend sur environ 40 % de la longueur du corps de jonction. Le corps de jonction présente deux extrémités coniques 405, 406 (figure 5).

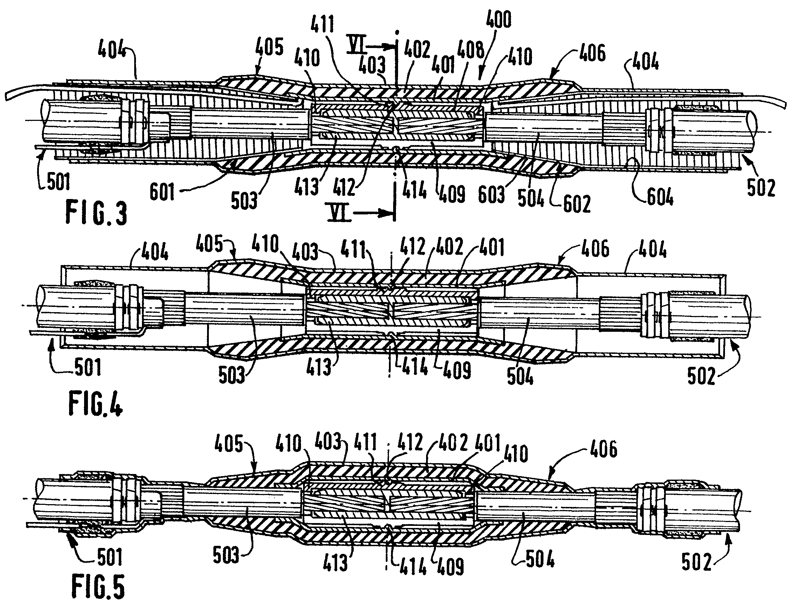

Sur les figures 3 et 4, les extrémités coniques 405, 406 et les prolongements cylindriques 404 du corps de jonction sont dans un état d'expansion radiale, tandis qu'une région centrale du corps de jonction comprise entre les deux extrémités coniques n'est pas expansée.

Dans l'exemple de la figure 3, le corps de jonction 400 est maintenu en expansion mécaniquement, au moyen de deux tubes 601, 602 constitués d'un ruban déchirable. Chaque tube comprend une portion en tronc de cône 603 prolongée, d'un côté de plus grand diamètre, par une portion cylindrique 604, la portion en tronc de cône 603 supportant une extrémité conique 406 du corps de jonction 400 et la portion cylindrique 604 supportant le prolongement cylindrique 404 de celui-ci.

Un fourreau 408 cylindrique présente une fente longitudinale 409 et, à deux extrémités, deux rebords 410 saillant radialement vers l'intérieur. Il comporte, sur une surface extérieure et dans une région axialement médiane, un bourrelet annulaire 411 dans lequel est ménagée une rainure annulaire 412. Ce fourreau est conducteur et est réalisé en un matériau élastique tel qu'en EPDM.

Le fourreau 408 est agencé pour recouvrir intimement une douille sertie 413 réunissant les deux câbles 501, 502, les deux rebords 410 du fourreau faisant face à deux extrémités de la douille sertie. Il s'étend axialement depuis une couche isolante 503 d'un câble jusqu'à une couche isolante 504 du second câble.

La couche intérieure 401 du corps de jonction 400 porte, sur une face intérieure et dans une région axialement médiane, un bourrelet annulaire 414 dont les dimensions sont adaptées pour qu'il soit reçu dans la rainure annulaire 412 du fourreau 408.

Le fourreau 408 a plusieurs fonctions. D'une part, il adapte le diamètre intérieur du corps de jonction 400 au diamètre extérieur de la douille sertie 413. D'autre part, étant en contact avec ces deux pièces, il les relie électriquement et permet l'évacuation de chaleur, depuis la douille sertie 413 jusqu'au corps de jonction 400.

L'exemple de la figure 4 se distingue de celui de la figure 3 en ce que le corps de jonction 400 comprend une portion présentant une caractéristique thermorétractable et est donc maintenu dans l'état expansé sans avoir à utiliser des tubes de soutien.

La région centrale non expansée du corps de jonction des figures 3 et 4 présente un diamètre intérieur supérieur au plus grand diamètre du câble le plus volumineux que l'on souhaite pouvoir adapter à ce corps de jonction, de façon que ce dernier puisse, dans tous les cas, être enfilé sur l'un des câbles 501, 502 avant l'assemblage de ceux-ci.

Sur site, le corps de jonction étant enfilé sur l'un des câbles, l'assemblage entre les âmes de ceux-ci est réalisé au moyen de la douille sertie 413. Puis, le fourreau 408 est rapporté sur la douille sertie 413 après avoir été élargi, mettant à profit son élasticité. Ensuite, le corps de jonction est ramené sur le fourreau 408 et sa rétraction est provoquée. Cette situation est illustrée sur la figure 5 dans laquelle les extrémités coniques 405, 406 du corps de jonction s'appuient sur la couche isolante 503, 504 des câbles, et ses prolongements cylindriques 404 s'appuient sur des écrans conducteurs et des gaines extérieures isolantes des câbles.

Dans tous les cas, il sera avantageux que le prolongement cylindrique de la couche extérieure conductrice de la prise ou de corps de jonction s'étende sur une longueur supérieure à 20 % de celle de ceux-ci.

## Revendications

1. Dispositif de raccordement (200) pour équiper une extrémité d'un câble électrique (100) ou relier entre elles deux extrémités de deux câbles électriques, ce dispositif comprenant un manchon multicouche monobloc ayant un axe (202) et présentant une couche intermédiaire isolante (204) interposée entre deux couches radialement intérieure (203) et extérieure (205) aptes à assurer un guidage d'un champ électrique, ce manchon comportant une portion axialement médiane logeant des moyens de contact électrique (211, 212) destinés à coopérer avec une âme du ou des câbles, une première extrémité (207 ; 405) destinée à coopérer avec une extrémité isolée de câble et une seconde extrémité (406) destinée à coopérer, soit avec un autre dispositif de raccordement, soit avec une autre extrémité isolée de câble, caractérisé en ce que la ou lesdites extrémités (207 ; 405, 406) du manchon destinées à coopérer avec une extrémité de câble sont dans un état d'expansion radiale tel qu'elles présentent, en tout point le long de l'axe (202) du manchon, un diamètre intérieur qui est supérieur au diamètre extérieur que présente l'extrémité de câble correspondante en ce point et qui sera inférieur à ce diamètre extérieur une fois qu'une rétraction desdites extrémités du manchon aura été provoquée, tandis que ladite portion axialement médiane du manchon et, le cas échéant, l'extrémité (208) du manchon destinée à coopérer avec un autre dispositif de raccordement sont dans un état de non-expansion radiale.

2. Dispositif selon la revendication 1, dans lequel la ou les extrémités expansées (207 ; 405, 406) du manchon comprennent une portion en un matériau thermorétractable tandis que le reste du manchon est en un matériau non-thermorétractable.

3. Dispositif selon la revendication 1, dans lequel la ou les extrémités expansées (207 ; 405, 406) du manchon sont en un matériau élastique.

4. Dispositif selon la revendication 3, dans lequel la ou les extrémités expansées (207 ; 405, 406) du manchon portent, sur une surface extérieure, des pattes de traction, et le dispositif de raccordement comprend des moyens d'expansion coopérant avec lesdites pattes de traction pour appliquer sur celles-ci une force de traction dirigée radialement vers l'extérieur.

5. Dispositif selon la revendication 3, qui comprend, à l'intérieur de chacune des extrémités expansées du manchon, un tube (300) constitué d'un ruban déchirable sur lequel prend appui ladite extrémité expansée.

6. Dispositif de raccordement (200) pour équiper une extrémité d'un câble électrique (100) ou relier entre elles deux extrémités de deux câbles électriques, ce dispositif comprenant un manchon multicouche monobloc ayant un axe (202) et présentant une couche intermédiaire isolante (204) interposée entre deux couches radialement intérieure (203) et extérieure (205) aptes à assurer un guidage d'un champ électrique, ce manchon comportant une portion axialement médiane logeant des moyens de contact électrique (211, 212) destinée à coopérer avec une âme du ou des câbles, une première extrémité (207 ; 405) destinée à coopérer avec une extrémité isolée de câble et une seconde extrémité (406) destinée à coopérer, soit avec un autre dispositif de raccordement, soit avec une autre extrémité isolée de câble, caractérisé en ce que la ou lesdites extrémités (207 ; 405, 406) du manchon destinées à coopérer avec une extrémité de câble comportent des moyens de maintien susceptibles de les maintenir dans un état d'expansion radiale, tandis que ladite portion axialement médiane du manchon et, le cas échéant, l'extrémité (208) du manchon destinée à coopérer avec un autre dispositif de raccordement seront dans un état de non-expansion radiale.

7. Dispositif selon la revendication 6, dans lequel lesdits moyens de maintien consistent en ce que la ou les extrémités expansibles (207 ; 405, 406) du manchon comprennent une portion en un matériau thermorétractable tandis que le reste du manchon est en un matériau non-thermorétractable.

8. Dispositif selon la revendication 6, dans lequel lesdits moyens de maintien comprennent des pattes de traction solidaires d'une surface extérieure de chacune des extrémités expansibles (207 ; 405, 406) du manchon.

9. Dispositif selon l'une quelconque des revendications 6 à 8, dans lequel, à l'extrémité (207) ou aux extrémités (405, 406) du manchon coopérant avec une extrémité de câble, la couche extérieure (205) s'étend axialement au-delà de la couche isolante (204) selon un prolongement cylindrique (210) dans une mesure telle que ledit prolongement est susceptible de recouvrir une portion dénudée d'un écran conducteur (103) et une gaine extérieure du câble.

10. Procédé pour monter un dispositif de raccordement (200) à l'extrémité d'un câble électrique (100) ou entre deux extrémités de deux câbles électriques (501, 502), chaque câble comportant une âme conductrice (101), une couche isolante (102) recouvrant l'âme, un écran conducteur (103) recouvrant la couche isolante et une gaine extérieure (104) recouvrant l'écran conducteur (103), le dispositif de raccordement comprenant un manchon multicouche monobloc ayant un axe (202) et présentant une couche intermédiaire isolante (204) interposée entre deux couches radialement intérieure (203) et extérieure (205) aptes à assurer un guidage d'un champ électrique, ce manchon comportant une portion axialement médiane logeant des moyens de contact électrique (211, 212) destinés à coopérer avec une âme du ou des câbles, une première extrémité (207 ; 405) destinée à coopérer avec une extrémité isolée de câble, et une seconde extrémité (406) destinée à coopérer, soit avec un autre dispositif de raccordement, soit avec une autre extrémité isolée de câble, la ou les extrémités (207 ; 405, 406) du manchon destinées à coopérer avec une extrémité de câble étant susceptibles d'être amenées dans un état d'expansion radiale, tandis que ladite portion axialement médiane du manchon et, le cas échéant, l'extrémité (208) du manchon destinée à coopérer avec un autre dispositif de raccordement seront dans un état de non-expansion radiale, caractérisé par les étapes suivantes :
- expanser radialement seulement ladite ou lesdites extrémités expansibles (207 ; 405, 406) du manchon dans une mesure telle qu'elles présentent, en tout point le long de l'axe (202) du manchon, un diamètre intérieur qui est supérieur au diamètre extérieur que présente l'extrémité de câble correspondante en ce point, tout en maintenant ladite portion axialement médiane du manchon et, le cas échéant, l'extrémité (208) du manchon destinée à coopérer avec un autre dispositif de raccordement dans un état de non-expansion radiale ;
- enfiler la ou les extrémités de câble à l'intérieur du dispositif de raccordement ainsi expansé et relier électriquement l'âme (101) du ou des câbles auxdits moyens de contact électrique (211) ; et
- provoquer la rétraction de ladite ou desdites extrémités expansées (207 ; 405, 406) du manchon sur la ou les extrémités de câble.

11. Procédé selon la revendication 10, dans lequel le manchon (201) est en un matériau élastique et, après avoir expansé la ou les extrémités (207 ; 405, 406) du manchon destinées à coopérer avec la ou les extrémités du câble, on introduit à l'intérieur de chacune de celles-ci un tube (300) présentant un diamètre intérieur supérieur au diamètre extérieur de l'extrémité de câble correspondante et apte à maintenir la ou les extrémités (207) du manchon en expansion et, après avoir enfilé chaque extrémité de câble à l'intérieur du tube (300) correspondant, on retire celui-ci.

12. Procédé selon la revendication 10, dans lequel ladite ou lesdites extrémités (207 ; 405, 406) du manchon destinées à coopérer avec la ou les extrémités du câble comprennent une portion en un matériau thermorétractable, caractérisé par les étapes suivantes :
- chauffer ladite ou lesdites extrémités (207) du manchon destinées à coopérer avec la ou les extrémités de câble ;
- expanser radialement cette ou ces extrémités (207) jusqu'à un diamètre intérieur supérieur au diamètre extérieur de l'extrémité de câble correspondante ;
- refroidir cette ou ces extrémités pour les maintenir à l'état expansé ;
- enfiler cette ou ces extrémités de câble à l'intérieur du dispositif de raccordement ainsi expansé et relier électriquement l'âme (101) du ou des câbles auxdits moyens de contact électrique (211) ; et
- chauffer ladite ou lesdites extrémités de manchon expansées (207) pour provoquer leur rétraction sur la ou les extrémités de câble.

## Patentansprüche

1. Verbinder (200) zum Anbringen an einen Endbereich eines elektrischen Kabels (100) oder zur Verbindung zweier Endbereiche elektrischer Kabel, der eine mehrschichtige, zusammenhängende und eine Achse (202) aufweisende Umhüllung hat, die aufweist eine isolierende Zwischenschicht (204), welche radial zwischen zwei Schichten, die ein elektrisches Feld leiten können, angeordnet ist, nämlich einer inneren (203) und einer äußeren (205), wobei diese Umhüllung einen axial im mittleren Bereich gelegenen Abschnitt hat, der elektrische Kontaktmittel (211, 212) aufnimmt, die mit einem Leiter des mindestens einen Kabels zusammenwirken, einen ersten Endbereich (207; 405), der für ein Zusammenwirken mit einem isolierten Endbereich des Kabels bestimmt ist und einen zweiten Endbereich (406), der bestimmt ist für ein Zusammenwirken mit entweder einem anderen Verbinderteil oder mit einem isolierten Endbereich eines anderen Kabels, dadurch gekennzeichnet, daß der mindestens eine Endbereich (207; 405, 406) der Umhüllung, der für das Zusammenwirken mit einem Endbereich des Kabels bestimmt ist, sich so in einem radialen Ausdehnungszustand befindet, daß er auf jedem Punkt entlang der Achse (202) der Umhüllung einen Innendurchmesser hat, der größer ist als der Außendurchmesser, den der Endbereich des entsprechenden Kabels an diesem Punkt aufweist und der kleiner ist als dieser Außendurchmesser, wenn ein Schrumpfen des mindestens einen Endbereichs der Umhüllung ausgelöst worden ist, wohingegen der axial im mittleren Bereich befindliche Abschnitt der Umhüllung und, sofern dies der Fall ist, der Endbereich (208) der Umhüllung, der mit einem anderen Verbinderteil zusammenwirken soll, sich im radial nicht-expandierten Zustand befinden.

2. Verbinder nach Anspruch 1, bei dem der mindestens eine expandierte Endbereich (207; 405, 406) der Umhüllung einen Abschnitt aus einem wärmeschrumpfbaren Material aufweist, während der Rest der Umhüllung aus einem nicht wärmeschrumpffähigen Material ist.

3. Verbinder nach Anspruch 1, bei dem der mindestens eine expandierte Endbereich (207; 405, 406) der Umhüllung aus einem elastischen Material ist.

4. Verbinder nach Anspruch 3, bei dem der mindestens eine expandierte Endbereich (207; 405, 406) der Umhüllung auf einer Außenfläche Ziehvorsprünge aufweist und der Verbinder Expansionsmittel hat, die mit diesen Ziehvorsprüngen zusammenwirken, um auf diese eine radial nach außen gerichtete Zugkraft auszuüben.

5. Verbinder nach Anspruch 3, der im Inneren jedes der expandierten Endbereiche der Umhüllung ein Rohr (300) aufweist, das von einem abreißbaren Band gebildet ist, auf dem sich der expandierte Endbereich abstützt.

6. Verbinder (200) zum Anbringen an einen Endbereich eines elektrischen Kabels (100) oder zur Verbindung zweier Endbereiche elektrischer Kabel, der eine mehrschichtige, zusammenhängende und eine Achse (202) aufweisende Umhüllung hat, die aufweist eine isolierende Zwischenschicht (204), welche radial zwischen zwei Schichten, die ein elektrisches Feld leiten können, angeordnet ist, nämlich einer inneren (203) und einer äußeren (205), wobei diese Umhüllung einen axial im mittleren Bereich gelegenen Abschnitt hat, der elektrische Kontaktmittel (211, 212) aufnimmt, die mit einem Leiter des mindestens einen Kabels zusammenwirken, einen ersten Endbereich (207; 405), der für ein Zusammenwirken mit einem isolierten Endbereich des Kabels bestimmt ist und einen zweiten Endbereich (406), der bestimmt ist für ein Zusammenwirken mit entweder einem anderen Verbinderteil oder mit einem isolierten Endbereich eines anderen Kabels, dadurch gekennzeichnet, daß der mindestens eine Endbereich (207; 405, 406) der Umhüllung, der für das Zusammenwirken mit einem Endbereich des Kabels bestimmt ist, Spreizmittel aufweist, die sie in einem radial expandierten Zustand halten, wohingegen der axial im mittleren Bereich befindliche Abschnitt der Umhüllung und, sofern dies der Fall ist, der Endbereich (208) der Umhüllung, der mit einem anderen Verbinderteil zusammenwirken soll, sich im radial nicht-expandierten Zustand befinden.

7. Verbinder nach Anspruch 6, dadurch gekennzeichnet, daß die Spreizmittel, aus denen der mindestens eine expandierbare Endbereich (207; 405, 406) der Umhüllung besteht, einen Abschnitt aus einem wärmeschrumpfbaren Material aufweisen, während der Rest der Umhüllung aus einem nicht wärmeschrumpffähigen Material ist.

8. Verbinder nach Anspruch 6, bei dem die Spreizmittel Vorsprünge aufweisen, die an einer Außenfläche jedes der expandierbaren Endbereiche (207; 405, 406) der Umhüllung vorgesehen sind.

9. Verbinder nach einem der Ansprüche 6 bis 8, bei dem der Endbereich (207) oder die Endbereiche (405, 406) der Umhüllung mit einem Endbereich des Kabels zusammenwirken und bei dem sich die äußere Schicht (205) axial bis hin zur isolierenden Lage (204) in einer zylindrischer Verlängerung (210) dergestalt erstreckt, daß die Verlängerung einen abisolierten Teil der Abschirmung (103) und einen Mantel des Kabels aufnehmen kann.

10. Verfahren zum Anbringen eines Verbinders (200) an einem Endbereich eines elektrischen Kabels (100) oder zwischen zwei Endbereichen zweier elektrischer Kabel (501, 502), wobei jedes Kabel einen Leiter (101), eine Isolierschicht (102), die den Leiter abdeckt, eine Abschirmung (103), die die Isolierschicht überdeckt und einen Mantel (104), der die Abschirmung (103) überdeckt, aufweist und der Verbinder eine mehrschichtige, zusammenhängende und eine Achse (202) aufweisende Umhüllung hat, die aufweist eine isolierende Zwischenschicht (204), welche radial zwischen zwei Schichten, die ein elektrisches Feld leiten können, angeordnet ist, nämlich einer inneren (203) und einer äußeren (205), wobei diese Umhüllung einen axial im mittleren Bereich gelegenen Abschnitt hat, der elektrische Kontaktmittel (211, 212) aufnimmt, die mit einem Leiter des mindestens einen Kabels zusammenwirken, einen ersten Endbereich (207; 405), der für ein Zusammenwirken mit einem isolierten Endbereich des Kabels bestimmt ist und einen zweiten Endbereich (406), der bestimmt ist für ein Zusammenwirken mit entweder einem anderen Verbinderteil oder mit einem isolierten Endbereich eines anderen Kabels, wobei der mindestens eine Endbereich (207; 405, 406) der Umhüllung, der für das Zusammenwirken mit einem Endbereich des Kabels bestimmt ist, in einen radialen Ausdehnungszustand gebracht werden kann, und der axial im mittleren Bereich befindliche Abschnitt der Umhüllung und, sofern dies der Fall ist, der Endbereich (208) der Umhüllung, der mit einem anderen Verbinderteil zusammenwirken soll, sich im radial nichtexpandierten Zustand befinden, gekennzeichnet durch die folgenden Schritte:
- Radiales Expandieren des mindestens einen expandierbaren Endbereichs (207; 405, 406) der Umhüllung in einem Maße, daß dieser auf allen Punkten entlang der Achse (202) der Umhüllung einen Innendurchmesser aufweist, der größer ist als der Außendurchmesser, den der Endbereich des entsprechenden Kabels an diesem Punkt aufweist, wobei der axial im mittleren Bereich befindliche Abschnitt der Umhüllung und, falls der Fall vorliegt, der Endbereich (208) der Umhüllung, der für ein Zusammenwirken mit einem anderen Verbinder bestimmt ist, in einem nicht radial expandierten Zustand gehalten werden;
- Einfädeln des mindestens einen Endbereichs des Kabels in den Innenraum des Verbinders, der expandiert ist, und elektrisches Verbinden des Leiters (101) des mindestens einen Kabels mit den elektrischen Kontaktmiteln (211) und
- Auslösen eines Schrumpfens des mindestens einen expandierten Endbereichs (207; 405, 406) der Umhüllung über dem mindestens einen Endbereich des Kabels.

11. Verfahren nach Anspruch 10, wobei die Umhüllung (201) aus einem elastischen Material gefertigt ist und nach Expandieren des mindestens einen Endbereichs (207; 405, 406) des Verbinders, der für ein Zusammenwirken mit mindestens einem Endbereich des Kabels bestimmt ist, in den Innenraum eines jeden ein Rohr (300) eingefügt wird, das einen größeren Innendurchmesser als der Außendurchmesser des Endbereichs des entsprechenden Kabels aufweist und geeignet ist, den mindestens einen Endbereich (207) der Umhüllung im expandierten Zustand zu halten und, nachdem der Endbereich des Kabels in das Innere des entsprechenden Rohrs (300) eingefügt ist, dieses entnommen wird.

12. Verfahren nach Anspruch 10, bei dem der mindestens eine Endbereich (207; 405, 406) der Umhüllung, der für ein Zusammenwirken mit mindestens einem Endbereich des Kabels bestimmt ist, einen Abschnitt aus einem wärmeschrumpfbaren Material aufweist, gekennzeichnet durch die folgenden Verfahrensschritte:
- Heizen des mindestens einen Endbereichs (207) der Umhüllung, der mit dem mindestens einen Endbereichs des Kabels zusammenwirken soll,
- radiales Expandieren dieses mindestens einen Endbereichs (207), bis der Innendurchmesser größer ist als der Außendurchmesser des Endbereichs des entsprechenden Kabels
- Abkühlen des mindestens einen Endbereichs, um ihn im expandierten Zustand zu halten,
- Einbringen des mindestens einen Endbereichs des Kabels in den Innenraum des so expandierten Verbinders und elektrischer Anschluß des Leiters (101) des mindestens einen Kabels an die elektrischen Kontaktmittel (211) und
- Heizen des mindestens einen Endbereichs der expandierten Umhüllung (207), um die Schrumpfung auf den mindestens einen Endbereich des Kabels zu bewirken.

## Claims

1. A connection device (200) for equipping one end of a power cable (100) or for joining together two ends of two power cables, this device comprising a one-piece multilayer sleeve having an axis (202) and having an insulating intermediate layer (204) interposed between two layers, a radially inner layer (203) and a radially outer layer (205), which are capable of guiding an electric field, this sleeve including an axially central portion housing electrical contacting means (211, 212) intended to interact with a core of the cable or cables, a first end (207; 405) intended to interact with an insulated cable end and a second end (406) intended to interact either with another connection device or with another insulated cable end, characterized in that the said end or ends (207; 405, 406) of the sleeve which are intended to interact with a cable end are in a state of radial expansion such that, at every point along the axis (202) of the sleeve, they have an internal diameter which is greater than the external diameter of the corresponding cable end at this point and which will be less than this external diameter once the said ends of the sleeve have been made to shrink, whereas the said axially central portion of the sleeve and, as the case may be, that end (208) of the sleeve intended to interact with another connection device are not in a radially expanded state.

2. A device according to claim 1, in which the expanded end or ends (207; 405, 406) of the sleeve comprise a portion made of heat-shrinkable material whereas the rest of the sleeve is made of a material which is not heat-shrinkable.

3. A device according to claim 1, in which the expanded end or ends (207; 405, 406) of the sleeve are made of an elastic material.

4. A device according to claim 3, in which the expanded end or ends (207; 405, 406) of the sleeve carry tensioning fingers on an external surface and the connection device comprises expansion means interacting with the said tensioning fingers in order to apply an outwardly directed radial tensile force on them.

5. A device according to claim 3, which comprises, inside each of the expanded ends of the sleeve, a tube (300) consisting of a pull-out tape on which the said expanded end bears.

6. A connection device (200) for equipping one end of a power cable (100) or for joining together two ends of two power cables, this device comprising a one-piece multilayer sleeve having an axis (202) and having an insulating intermediate layer (204) interposed between two layers, a radially inner layer (203) and a radially outer layer (205), which are capable of guiding an electric field, this sleeve including an axially central portion housing electrical contacting means (211, 212) intended to interact with a core of the cable or cables, a first end (207; 405) intended to interact with an insulated cable end and a second end (406) intended to interact either with another connection device or with another insulated cable end, characterized in that the said end or ends (207; 405, 406) of the sleeve which are intended to interact with a cable end include holding means capable of holding them in place in a state of radial expansion, whereas the said axially central portion of the sleeve and, as the case may be, that end (208) of the sleeve intended to interact with another connection device will not be in a radially expanded state.

7. A device according to claim 6, in which the said holding means consist in that the expansible ends (207; 405, 406) of the sleeve comprise a portion made of a heat-shrinkable material whereas the rest of the sleeve is made of a material which is not heat-shrinkable.

8. A device according to claim 6, in which the said holding means comprise tensioning fingers fastened to an external surface of each of the expansible ends (207; 405, 406) of the sleeve.

9. A device according to any one of claims 6 to 8, in which, at the end (207) or at the ends (405, 406) of the sleeve interacting with a cable end, the external layer (205) extends axially beyond the insulating layer (204) as a cylindrical extension (210) to such an extent that the said extension can cover a stripped portion of a conductive screen (103) and an external sheath of the cable.

10. A process for mounting a connection device (200) at the end of a power cable (100) or between two ends of two power cables (501, 502), each cable including a conductive core (101), an insulating layer (102) covering the core, a conductive screen (103) covering the insulating layer, and an external sheath (104) covering the conductive screen (103), the connection device comprising a one-piece multilayer sleeve having an axis (202) and having an insulating intermediate layer (204) interposed between two layers, a radially inner layer (203) and a radially outer layer (205), which are capable of guiding an electric field, this sleeve including an axially central portion housing electrical contacting means (211, 212) intended to interact with a core of the cable or cables, a first end (207; 405) intended to interact with an insulated cable end and a second end (406) intended to interact either with another connection device or with another insulated cable end, the end or ends (207; 405, 406) of the sleeve which are intended to interact with a cable end being capable of being brought into a state of radial expansion, whereas the said axially central portion of the sleeve and, as the case may be, that end (208) of the sleeve intended to interact with another connection device will not be in a state of radial expansion, characterized by the following steps:
- of radially expanding just the said expansible end or ends (207; 405, 406) of the sleeve to such an extent that they have, at every point along the axis (202) of the sleeve, an internal diameter which is greater than the external diameter of the corresponding cable end at this point, while at the same time holding in place the said axially central portion of the sleeve and, as the case may be, that end (208) of the sleeve intended to interact with another connection device not in a state of radial expansion;
- of slipping the cable end or ends into the connection device thus expanded and electrically connecting the core (101) of the cable or cables to the said electrical contacting means (211); and
- of causing the said expanded end or ends (207; 405, 406) of the sleeve to shrink onto the cable end or ends.

11. The process according to claim 10, in which the sleeve (201) is made of an elastic material and, after expanding the end or ends (207; 405, 406) of the sleeve which are intended to interact with the end or ends of the cable, a tube (300), which has an internal diameter greater than the external diameter of the corresponding cable end and is capable of holding in place the end or ends (207) of the sleeve in the expanded state, is inserted into each of the latter and, after slipping each cable end into the corresponding tube (300), the latter is removed.

12. A process according to claim 10, in which the said end or ends (207; 405, 406) of the sleeve which are intended to interact with the end or ends of the cable comprise a portion made of a heat-shrinkable material, characterized by the following steps:
- of heating the said end or ends (207) of the sleeve which are intended to interact with the cable end or ends;
- of radially expanding this end or these ends (207) as far as an internal diameter greater than the external diameter of the corresponding cable end;
- of cooling this end or these ends in order to hold them in place in the expanded state;
- of slipping this cable end or these cable ends into the connection device thus expanded and electrically connecting the core (101) of the cable or cables to the said electrical contacting means (211); and
- of heating the said expanded sleeve end or ends (207) in order to cause them to shrink onto the cable end or ends.
